Europäisches Patentamt

European Patent Office

Office européen des brevets

(19)

(11) Numéro de publication: **0 267 845 B1**

## (12) FASCICULE DE BREVET EUROPEEN

(45) Date de publication de fascicule du brevet:
08.05.91

(51) Int. Cl.⁵: **H02K 16/00, H02K 57/00, H02K 17/26, H02K 41/025**

(21) Numéro de dépôt: **87402439.1**

(22) Date de dépôt: **29.10.87**

(54) **Actionneur électromagnétique à deux entrefers.**

(30) Priorité: **30.10.86 FR 8615109**

(43) Date de publication de la demande:
**18.05.88 Bulletin 88/20**

(45) Mention de la délivrance du brevet:
**08.05.91 Bulletin 91/19**

(84) Etats contractants désignés:
**CH DE GB IT LI SE**

(56) Documents cités:
**EP-A- 0 096 390    FR-A- 2 154 852
FR-A- 2 245 115    GB-A- 1 281 992
US-A- 3 885 205    US-A- 4 473 752**

(73) Titulaire: **ETAT-FRANCAIS représenté par le DELEGUE GENERAL POUR L'ARMEMENT (DPAG)
Bureau des Brevets et Inventions de la Délégation Générale pour l'Armement 26, Boulevard Victor
F-75996 Paris Armées(FR)**

(72) Inventeur: **Foggia, Albert
Ecole Centrale de Lyon 36 Route de Dardilly
F-69130 Ecully(FR)**
Inventeur: **Sabonnadière, Jean-Claude
Ecole centrale de Lyon 36 route de Dardilly
F-69130 Ecully(FR)**

EP 0 267 845 B1

## Description

La présente invention a pour objet un actionneur électromagnétique à deux entrefers comprenant, d'une part, un stator cylindrique, constitué par un premier circuit magnétique associé à des enroulements polyphasés disposés dans des encoches formées à la périphérie dudit premier circuit magnétique et, d'autre part, un rotor cylindrique concentrique au stator, qui est situé en regard de la périphérie dudit premier circuit magnétique, laquelle est munie d'encoches, et qui est constitué par un second circuit magnétique associé à des moyens électromagnétiques.

L'invention concerne, d'une manière générale, les actionneurs électromagnétiques linéaires susceptibles de fonctionner en moteurs ou en génératrices pour assurer la conversion électromécanique d'énergie.

Les actionneurs électriques existant actuellement sur le marché et utilisés pour des applications industrielles sont, pour la plupart, constituées d'un inducteur et d'un induit, cylindriques, concentriques. L'un est le stator fixe, l'autre le rotor mobile. Le couple ou la poussée électromagnétique est créé par l'intéraction des moyens électromagnétiques situés de part et d'autre de l'entrefer qui existe entre le stator et le rotor. Les surfaces actives de ces machines sont donc la surface intérieure du stator et la surface extérieure du rotor.

La structure de ces actionneurs n'a pas évolué depuis leur création à l'exception, cependant, des machines à conducteurs libres ou des moteurs à induit cloche dont l'utilisation est limitée à des applications de faible puissance.

Afin d'augmenter la puissance massique des actionneurs connus, il est, généralement proposé d'utiliser des matériaux magnétiques de haute qualité. Or, ceux-ci sont coûteux et ne sont pas toujours faciles à usiner ni à assembler.

Dans le domaine des actionneurs électromagnétiques linéaires, on connait le brevet FR 2 154 852 qui décrit un actionneur à deux degrés de liberté constitué par deux moteurs différents agissant orthogonalement, mais le déplacement relatif des éléments est limité puisqu'ils ne sont pas concentriques.

L'invention vise à remédier aux inconvénients précités et à permettre d'accroître d'une part la puissance massique d'un convertisseur électromagnétique sans qu'il soit nécessaire d'avoir recours à des matériaux magnétiques coûteux, et d'autre part le déplacement linéaire relatif des éléments constitutifs.

L'invention vise, encore, à réaliser des convertisseurs électromagnétiques présentant une relativement faible inertie, notamment pour les puissances élevées.

Un autre but de l'invention consiste à réduire les forces électromagnétiques parasites et diminuer ainsi le niveau des vibrations transmises aux structures.

L'invention vise, en outre, à réaliser des machines électriques susceptibles de fonctionner, soit à très basse vitesse, soit à très grande visse, à partir d'une alimentation à fréquence imposée, telle qu'un réseau d'alimentation.

Ces buts sont atteints grâce à un actionneur électromagnétique du type mentionné en tête de la description, caractérisé en ce qu'il comprend, en outre, un écran cylindrique, concentrique au stator et au rotor, interposé entre ces derniers en délimitant un premier entrefer entre le stator et l'écran et un second entrefer entre l'écran et le rotor, en ce que l'écran cylindrique est est monté de façon à pouvoir se déplacer en translation par rapport au stator et par rapport au rotor et en ce que l'écran est constitué par un troisième circuit magnétique associé à des moyens électromagnétiques pour modifier les flux magnétiques créés par le stator et le rotor.

D'une manière générale, la force électromagnétique qui s'exerce sur l'écran mobile ou sur l'écran et le rotor lorsque ce dernier est également mobile, est obtenue par l'intéract ion des flux magnétiques créés dans les deux entrefers par l'ensemble des moyens électromagnétiques mis en oeuvre en combinaison avec le stator, le rotor et l'écran. La nature des moyens électromagnétiques, la géométrie des trois circuits magnétiques et le mode d'alimentation des divers enroulements déterminent les caractéristiques électromagnétiques du convertisseur électromagnétique.

L'invention peut faire l'objet de plusieurs applications différentes dans des domains où l'encombrement est fortement limité. Elle peut, également, être utilisée pour actionner des bras manipulateurs ou des articulations de robots. D'une manière générale, l'objet de l'invention peut être utilisé pour les mêmes applications que les machines classiques, mais avec des encombrements réduits et des nuisances moins importantes. Enfin, une variante particulière de l'invention peut remplacer un ensemble actionneur électrique réducteur dans des applications de robotique qui nécessitent un déplacement linéaire.

D'autres caractéristiques et avantages de l'invention ressortiront de la description suivante de modes particuliers de réalisation, donnés à titre d'exemples, en référence aux dessins annexés, sur lesquels :

- la fig.1 est une vue schématique en coupe transversale d'une structure d'actionneur linéaire,
- la fig.2 est une vue en coupe axiale prise selon la ligne II-II de la fig.1 et,

- la fig.3 est une vue schématique en coupe axiale montrant les moyens de support d'un actionneur linéaire, tel que celui des fig.1 et 2.

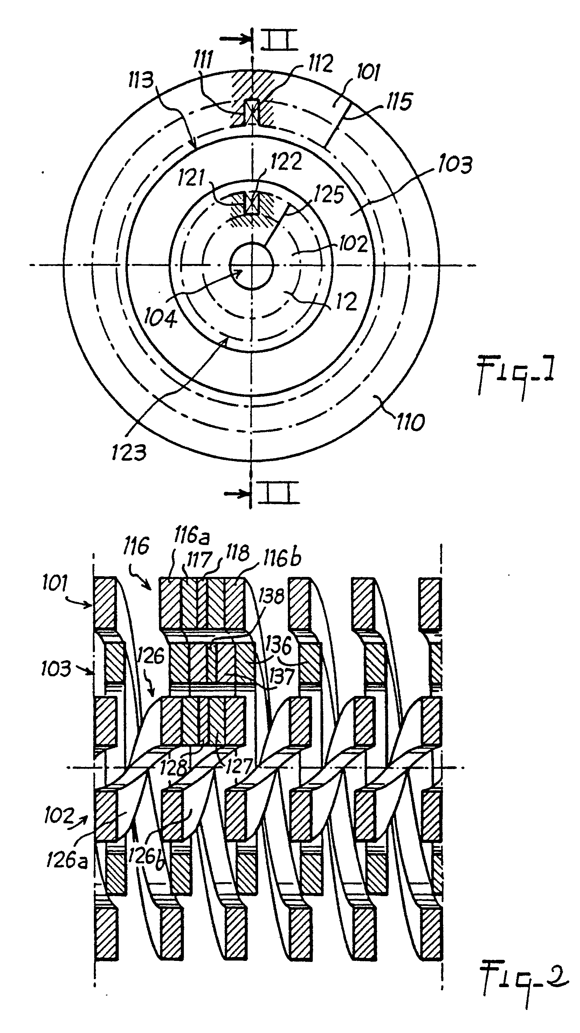

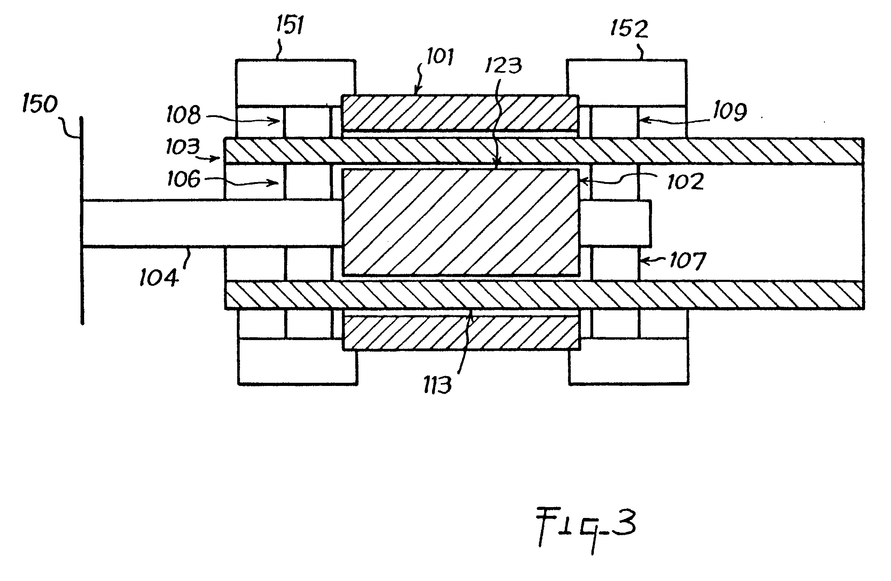

On a représenté sur les fig.1 à 3 un exemple d'une structure dans laquelle le stator 101 et le rotor 102 sont fixes, tandis que l'écran 103, interposé entre le stator extérieur 101 et le rotor intérieur 102, en ménageant des entrefers 113 et 123, respectivement, est mobile en translation le long de l'axe commun des trois éléments coaxiaux 101, 102, 103 qui présentent chacun une forme généralement cylindrique, comme représenté de façon symbolique sur la fig.3.

Le stator 101 est supporté à ses deux extrémités par des supports 151, 152, tandis que le rotor 102 est lui-même rendu solidaire d'un bâti 150 par un arbre central 104. L'écran 103 est lui-même monté sur des paliers radiaux 106, 107 situés de part et d'autre du rotor 103 entre l'arbre 104 et l'écran 103 et les supports 151, 152 de part et d'autre du stator 101. L'écran 103 est ainsi centré radialement par rapport au stator 101 et au rotor 102.

La stator 101 et le rotor 102 comprennent chacun un circuit magnétique 110, respectivement 120, réalisé à partir d'empilages de tôles munies d'encoches 111, respectivement 121, pour recevoir des enroulements polyphasés 112, respectivement 122 (fig.1). Les encoches 111 débouchent à la surface intérieure du stator 101 faisant face à l'écran 103, tandi que les encoches 121 débouchent à la surface extérieure du rotor 102 située en regard de l'écran 103.

De façon plus particulière, les circuits magnétiques 110, 120 sont constitués d'un assemblage de tôles préformées, de manière à réaliser une hélice. A partir de tôles, en forme de disque, munies d'encoches, analogues à celles utilisées dans la construction des stators et des rotors des machines à induction à rotor bobiné, on procède à une découpe selon un rayon (correspondant aux lignes 115 et 125 de la fig.1) et on déforme le paquet de tôles et l'ensemble de plusieurs paquets mis bout à bout et fixées, par exemple à l'aide d'une colle de contact magnétique, constitue une hélice.

Comme on peut le voir sur la fig.2, le circuit magnétique 110 du stator 101 comprend ainsi une première série de paquets de tôles ferromagnétiques conformés en hélice et raccordés les uns aux autres pour définir une première hélice 116 de pas prédéterminé et présentant un premier sens d'enroulement, tandis que le circuit magnétique 120 du rotor 102 comprend une deuxième série de paquets de tôles ferromagnétiques conformés en hélice et ra ccordés les uns aux autres pour définir une seconde hélice 126 de pas prédéterminé, coaxiale à la première hélice 116 et présentant un sens d'enroulement contraire audit premier sens d'enroulement.

Sur la fig.2, pour plus de clareté, on n'a pas représenté les encoches, ni les enroulements du stator 101 et du rotor 102.

Avantageusement, comme représenté sur la fig.2, chacune des hélices 116, 126 comprend une paire d'hélices 116 a, 116 b, respectivement 126 a, 126 b, de même pas, enroulées dans le même sens et imbriquées l'une dans l'autre. Il serait naturellement possible d'utiliser un nombre d'hélices imbriquées supérieur à deux.

Des entretoises 117, 127 en matériau isolant électriquement sont interposées entre les différents paquets de tôle successifs du stator 101 et du rotor 102. Des aimants permanents de polarisation 118, 128 peuvent être incorporés dans les entretoises 117, 127.

Ces aimants permanents 118, 128 crééent un champ statique qui permet d'arrêter l'écran 103 formant piston dans une position priviligiée.

Le pas d'un hélice statorique 116 peut être différent de celui d'une hélice rotorique 126.

Les caractéristiques de vitesse de translation de l'écran 103 et de poussée déterminent le choix de l'épaisseur des différents paquets de tôle, de leur nombre et de la longueur des circuits magnétiques de stator et de rotor.

La fixation de l'ensemble des paquets de tôles de chaque circuit magnétique 116, 126 peut être réalisée à l'aide de tiges filetées et d'écrous serrant sur des flasques placés aux deux extrémités.

L'écran 103 peut présenter une réalisation plus simple que celle du stator 101 et du rotor 102, l'écran 103 peut comprendre un simple cylindre conducteur, l'effort s'exerçant sur l'écran 103 étant dû à la présence de courants de Foucault et des inductions du stator 101 et du rotor 102.

L'écran 103 peut, toutefois, également être constitué d'un ensemble de paquets de tôles 136 séparés par des entretoises 137 et, le cas échéant, par des aimants permanents 138 disposés dans les entretoises 137. Les tôles de l'écran 103 peuvent être lisses ou encochées et de forme plane (fig.2) ou hélicoïdale. Ce dernier cas présente l'avantage de permettre, à la fois, un déplacement axial et une rotation autour de l'axe de l'actionneur et permet des applications, notamment à des machines-outils.

Le nombre et l'épaisseur des paquets de tôle de l'écran 103 peuvent être calculés pour réaliser avec les circuits magnétiques fixes un effet de réluctance variable ou un effet vernier électromagnétique.

Pour certaines applications particulières, une cage d'écureil peut être associée à un écran 103, tel que celui représenté sur la fig.2.

Un actionneur électromagnétique de type linéaire à double entrefer peut, naturellement, fonctionner en moteur on en générateur, comme dans le cas des actionneurs à écran tournant.

Par ailleurs, les encoches du stator, les encoches du rotor ou encore les encoches ménagées sur l'écran 103 peuvent être inclinées par rapport à l'axe longitudinal de la structure de la machine. Ceci permet de réduire les harmoniques d'espace et de maintenir l'écran 103 en position stable suivant la direction axiale.

Le rotor peut comporter un enroulement polyphasé qui peut être, par exemple, du type cage d'écureil, tandis que l'écran 103 comporte luimême deux enroulements polyphasés séparés magnétiquement par des barrières de flux constituées par des évidements formés dans l'écran 103 et séparés les uns des autres par dess portions non évidées de faible longueur.

## Revendications

1. Actionneur électromagnétique à deux entrefers, comprenant un stator cylindrique (101) constitué par un premier circuit magnétique (110) associé à des enroulements polyphasés (112) disposés dans des encoches (111) formées à la périphérie du premier circuit magnétique (110) et un rotor cylindrique (102) qui est concentrique au stator (101), est situé en regard de la périphérie du premier circuit magnétique (110) muni d'éncoches (111) et est constitué par un second circuit magnétique (120) associé à des moyens électromagnétiques (122), caractérisé en ce qu'il comprend, en outre, un écran cylindrique (103), concentrique au stator (101) et au rotor (102), interposé entre ces derniers en délimitant un premier entrefer (113) entre le stator (101) et l'écran (103) et un second entrefer (123) entre l'écran (103) et le rotor (102), en ce que l'écran cylindrique (103) est monté de façon à pouvoir se déplacer en translation par rapport au stator (101) et par rapport au rotor (102) et en ce que l'écran (103) est constitué par un troisième circuit magnétique associé à des moyens électromagnétiques pour modifier les flux magnétiques créés par le stator (101) et le rotor (102)

2. Actionneur selon la revendication 1, caractérisé en ce que l'écran (103) est monté mobile en translation par rapport au stator (101) et au rotor (102) selon l'axe commun, en ce que le circuit magnétique (110) du stator (101) est constitué par une première série de paquets de tôles ferromagnétiques conformés selon au moins une hélice et raccordés les uns aux autres pour définir au moins une première hélice (116) de pas prédéterminé et présentant un premier sens d'enroulement, en ce que le circuit magnétique (120) du rotor (102) est constitué par une deuxième série de paquets de tôles ferromagnétiques conformés selon au moins une hélice et raccordés les uns aux autres pour définir au moins une seconde hélice (126) de pas prédéterminé, coaxiale à la première hélice (116) et présentant un sens d'enroulement différent du prémier sens d'enroulement.

3. Actionneur selon la revendication 2, caractérisé en ce que l'écran (103) comprend un circuit magnétique constitué par une succession de paquets de tôles ferromagnétiques répartis le long de l'axe commun dans l'espace libre situé entre le stator (101) et le rotor (102) et séparés par des entretoises isolantes (117, 127, 137).

4. Actionneur selon la revendication 2 ou 3, caractérisé en ce que des aimants permanents (118, 128, 138) de polarisation sont incorporés dans les paquets de tôles (117, 127, 137).

5. Actionneur selon la revendication 1, dans lequel l'écran mobile (103) comprend des moyens électromagnétiques logés dans des encoches, caractérisé en ce que les encoches d'au moins l'un des trois éléments constitués par le stator, le rotor et l'écran sont inclinées axialement.

6. Actionneur selon la revendication 1, caractérisé en ce que l'écran (103) comporte des barrières de flux.

## Claims

1. Electromagnetic actuator with two gaps, including a cylindrical stator constituting a first magnetic circuit associated with multiphase windings arranged in notches formed at the periphery of the first magnetic circuit, and a cylindrical rotor concentric with the said stator, facing the periphery of the said first magnetic circuit, arranged with notches and constituting a second magnetic circuit associated with electromagnetic means, wherein the said actuator device further includes a cylindrical screen concentric with both said stator and rotor and placed between the said stator and rotor, thereby delimiting a first gap between the stator and the screen and a second gap between the screen and the rotor, wherein the cylindrical screen is constructed to be able to move in translation with respect to the stator and with respect to the rotor, and wherein the said screen constitutes a third magnetic circuit associated with electromagnetic means to modify the magnetic fluxes created by the stator and by the rotor.

2. The device of claim 1, wherein the said screen is constructed translationally mobile with respect to the said stator and rotor alone a common axis, wherein the magnetic circuit of the stator consists of a first series of ferromagnetic plate packets formed according to at least one spiral loop and adhered to each other to define at least one first spiral of predetermined pitch and having one direction of winding, wherein the magnetic circuit of the rotor consists of a second series of ferromagnetic plate packets formed according to at least one spiral loop and connected to each other to define at least a second spiral of predetermined pitch, coaxial with the first spiral, and following a winding sense different from that of the first winding sense.

3. The device of claim 2, wherein the screen includes a magnetic circuit consisting of a sequence of ferromagnetic plate packets distributed along the common axis in the free space located between the stator and the rotor, and separated by insulating spacers.

4. The device of claim 2 or 3, wherein permanent polarization magnets are incorporated in the plate packets.

5. The device of claim 1, in which the mobile screen includes electromagnetic means fitted in the notches, wherein the notches of at least one of the three elements consisting of the stator, rotor and screen, are inclined axially.

6. The device of claim 1, wherein the screen includes flux barriers.

## Ansprüche

1. Elektromagnetisches Betätigungsgerät mit zwei Luftspalten bestehend aus einem, um einen ersten magnetischen Kreis (110) mit in den am Umfang des ersten magnetischen Kreises angeordneten Nuten (112) eingelegten Mehrphasenwicklungen (112) aufgebauten zylindrischen Stator (101) sowie aus einem zylindrischen Rotor (102), der konzentrisch mit dem Stator (101) und dem Umfang des mit Nuten (111) versehenen ersten magnetischen Kreis (110) gegenüber angeordnet ist, sowie aus einem zweiten magnetischen Kreis (120) mit den entsprechenden elektromagnetischen Mitteln (122), dadurch gekennzeichnet, daß er außerdem mit einem mit dem Stator (101) und dem Rotor (102) konzentrischen zylindrischen Schild (103) versehen ist, der somit einen ersten Luftspalt (113) zwischen Stator (101) und Schild (103) sowie einen zweiten Luftspalt (123) zwischen Schild (103) und Rotor (102) abgrenzt, daß der zylindrische Schild (103) entsprechend angeordnet ist, damit er zwischen dem Stator (101) und dem Rotor (102) in Längsrichtung verschoben werden kann, und daß der Schild (103) aus einem dritten magnetischen Kreis mit entsprechenden elektromagnetischen Mitteln besteht, um die vom Stator (101) und vom Rotor (102) erzeugten Magnetflüsse zu ändern.

2. Betätigungsgerät nach Anspruch 1, dadurch gekennzeichnet, daß der Schild (103) zwischen dem Stator (101) und dem Rotor (102) auf der gemeinsamen Achse längsbeweglich eingebaut ist, daß der magnetische Kreis (110) des Stators (101) aus einem ersten Satz ferromagnetischer Bleche besteht, wobei diese Bleche einen schraubenlinienförmigen Verlauf haben und für die Bildung mindestens einer ersten Schraube (116) mit festgelegter Steigung sowie die Erzielung einer ersten Windungsrichtung angeschlossen sind, und daß der magnetische Kreis (120) des Stators (102) aus einem zweiten Satz ferromagnetischer Bleche besteht, wobei diese Bleche einen schraubenlinienförmigen Verlauf haben und für die Bildung mindestens einer zweiten koaxial zur ersten Schraube angeordneten zweiten Schraube (126) mit festgelegter Steigung sowie die Erzielung einer zweiten Windungsrichtung angeschlossen sind.

3. Betätigungsgerät nach Anspruch 2, dadurch gekennzeichnet, daß der Schild (103) einen magnetischen Kreis darstellt, der aus einer Folge ferromagnetischer Blechpakete besteht, die entlang der gemeinsamen Achse im freien Raum zwischen dem Stator (101) und dem Rotor (102) verteilt und durch isolierende Abstandsstücke (117, 127, 137) getrennt sind.

4. Betätigungsgerät nach Anspruch 2 oder 3, dadurch gekennzeichnet, daß zur Polarisierung eingesetzte Dauermagnete (118, 128, 138) zwischen den Blechpaketen (117, 127, 137) eingefügt sind.

5. Betätigungsgerät nach Anspruch 1 bei welchem der bewegliche Schild (103) in dessen Nuten mit elektromagnetischen Mitteln versehen ist, dadurch gekennzeichnet, daß die Nuten von mindestens einem der drei Elemente mit Namen Stator, Rotor und Schild im Bezug auf die Achse geneigt sind.

6. Betätigungsgerät nach Anspruch 1, dadurch gekennzeichnet, daß der Schild (103) mit Flußsperren versehen ist.

Fig.1

Fig.2

Fig. 3